# EUROPEAN PATENT APPLICATION

(11) **EP 0 796 567 A1**
(43) Date of publication of application: **24.09.1997**
(21) Application number: 96810080.0
(22) Date of filing: 07.02.1996
(51) Int. Cl.: A23P 1/02, A23D 9/05

(54) **Granular food product**

(71) Applicant: SOCIETE DES PRODUITS NESTLE S.A., 1800 Vevey (CH)
(72) Inventor: Bonasse Gahot,Sabine, CH-1434 Ependes (CH); Burri,Josef, 1066 Epalinges (CH); Geromini, Osvaldo, 1358 Valeyres/Rances (CH); Heck,Ernst, 1302 Vufflens-La Ville (CH); Reimerdes,Ernst H., 1009 Pully (CH); Sirohi, Dhan Pal, 1009 Pully (CH)
(74) Representative: Wavre, Claude-Alain

(57) **Abstract**

A process for the production of a free-flowing and instantly soluble granular food product which comprises preparing a mix of an oil or fats and powdery carbohydrates and/or protein rich materials, and agglomerating and/or plasticising and/or forming the mix into granules.

## Description

The present invention relates to a process for the production of a free-flowing and instantly dispersible and/or soluble granular food product.

DD-A-248502 (Institut für Getreideverarbeitung) discloses a process for the production of instant sauces or soups in the form of granules by preparing a powdery or doughlike mixture of protein hydrolysate, meat or vegetable material, instant flour or semolina, salt, sugar and spices, granulating it with a press or with an extruder, fluidised bed coating the granules with oil, carbohydrates or gums and drying them.

GB-A-2131271 (Institut für Getreideverarbeitung) discloses a process for the production of a granulated food based on milk or other animal or vegetable proteins, carbohydrates, fats and minerals which comprises mixing powdery components in a fluidised bed and spraying a liquid mix of the remaining components into the powdery components, the powdery material being coated and agglomerated by the sprayed material and dried simultaneously in the fluidised bed.

US-A-5332585 (Odermatt et al.) discloses a process for preparing a granular food product by mixing a molten fat with an amylaceous material, extruding the mixture in strands, cooling the strands, subdividing them into sections and projecting the sections through a grill to reduce them into granules.

The problem addressed by the present invention was to provide a novel and simple process for the production of a free-flowing and instantly dispersible and/or soluble granular food product from carbohydrates, proteins, and oil or fats.

To this end, the process according to the present invention comprises preparing a mix of an oil or fats and powdery carbohydrates and/or protein rich materials, and agglomerating and/or plasticising and/or forming the mix into granules.

In a first preferred embodiment, the present process comprises preparing said mix in an extruder, plasticising the mix in the extruder and forming the mix into granules by extruding the plasticised mix in strands and cutting the strands.

In a second preferred embodiment, the present process comprises mixing powdery carbohydrates and/or protein rich materials with an oil or fat, further mixing the mixture thus obtained with further powdery carbohydrates and/or protein rich materials in order to obtain a powdery mix, and forming the mix into granules by agglomeration and/or other forming techniques.

The process according to the present invention indeed enables a granular food product to be produced from carbohydrates, proteins, and oil or fats which is instantly dispersible and/or soluble in warm or boiling water and which is thus suitable for the preparation of instant food in pap or liquid form.

The present process, especially in the said second preferred embodiment, even surprisingly enables a granular food product to be produced from carbohydrates, proteins, and oil or fats which, if simply shaken together with warm or boiling water, instantly provides a stable emulsion although it has never been homogenised.

Throughout the present specification and claims the expression "stable emulsion" means that a fat phase is present in form of globules about 1 to 2 micrometers in diameter homogeneously dispersed in a liquid phase without any phase separation being observed.

The term "desintegrant" means a food grade desintegrating agent which is able to desintegrate the granules dispersed in water, by way of a capillarity effect, as far as the desintegrant containing granules were compacted to a certain extent during their forming.

The present process may start from carbohydrates, proteins and/or oil or fats in form of the components of an animal or vegetable material, such as milk solids, cereal flour or soya flour, and/or in form of individual components, such as starch, polysaccharides, maltodextrines, saccharose, glucose, egg proteins, gluten, protein concentrates or protein isolates from milk, whey or soya, triglycerides of animal or vegetable origin, milk fat, palm oil, palm olein, coconut oil, or rape seed oil, for example.

Thus, it is possible to prepare a mix which comprises, in part by weights, from 5 to 95 parts, preferably from 30 to 70 parts of carbohydrates, up to 40 parts, preferably from 15 to 30 parts of proteins, and up to 80 parts, preferably from 5 to 40 parts of oil or fats, for example.

The following components may be added before and/or after preparing said mix:
- up to 25 parts, preferably up to 15 parts of water,
- up to 5 parts, preferably up to 0.6 part of emulsifier, such as lecithin, mono- and/or diglycerides,
- up to 3 parts, preferably up to 1 part of desintegrants, such as modified starches, carboxymethylcellulose (CMC), formaldehyde-casein and other modified proteins,
- up to 3 parts, preferably up to 1 part of stabilizers, such as pectine, xanthan and other gums,
- and, optionally, vitamins, micronutrients and/or antioxidants.

In said first preferred embodiment where the present process comprises preparing said mix in an extruder, it is possible to prepare an emulsion from an oil, water and an emulsifier, and to introduce simultaneously or successively said emulsion and said powdery materials into the extruder.

Alternatively it is possible to prepare a mixture of an oil or fats and powdery carbohydrates, prepare an aqueous emulsion of an oil and powdery protein materials, and introduce simultaneously or successively the mixture and the emulsion into the extruder.

The extruder may be a single screw or a twin screw extruder such as a MAPIMPIANTI or WENGER single screw extruder, or a BUHLER, WENGER, CLEXTRAL or WERNER & PFLEIDERER twin screw extruder, or a READCO type TELEDYNE or AOUSTIN twin screw mixer, for example.

The temperature may be adjusted in different zones of the extruder in function of the work which is to be carried out in these zones, namely mixing (room temperature), fat melting (above about 55°C), plasticising and/or starch gelatinising (from about 120°C to about 180°C). The pressure may be adjusted accordingly from above atmospheric pressure (mixing, fat melting) up to between about 200 kPa and about 10 MPa (plasticising, starch gelatinising, extruding), the residence time within the extruder possibly being from about 2 s to about 2 min, for example.

The plasticised mixture may be extruded in strands through a die such as a plate having circular openings from about 1 mm to 3 mm in diameter, for example.

The extruded strands may be cut into granules from about 2 mm to about 5 mm in length, the granules having a bulk density of from about 400 g/l to about 600 g/l, for example.

Further forming steps such as compacting and or spheronising may be provided for, so that the bulk density of the granules be increased up to values between about 500 and 1000 g/l, for example.

In said second preferred embodiment where the present process comprises forming said mix into granules by agglomeration and/or other forming techniques, the step of mixing powdery carbohydrates and/or protein rich materials with an oil or fat preferably comprises mixing together for about 5 to about 15 min at a temperature of from above about 45°C to about 65°C:
- from 15 to 25 parts of oils, especially coconut oil, palm olein and/or soya bean oil, which have a clear melting point of between 30-45°C,and
- from 15 to 25 parts of lactose, or from 10 to 20 parts of starch, or from 40 to 50 parts of skimmed milk powder.

The step of further mixing the mixture thus obtained with further powdery carbohydrates and/or protein rich materials in order to obtain a powdery mix preferably comprises agitating said mixture in a mixer such as a LOEDIGE, a PRUDIMA or a pastry mixer at a temperature of from about 45°C to about 65°C for up to 2 min, and progressively adding while further agitating for about 5 to 15 min and while cooling the mixer with water at about room temperature:
- skimmed milk powder, starch, especially cold swelling starch and/or lactose in respective amounts such that the total amount of each of these materials in the mix is from 40 to 50 parts for the skimmed milk powder, from 10 to 20 parts for the starch and from 15 to 25 parts for the lactose.

The agglomeration of the powdery mix thus obtained may be carried out with the aid of steam and/or an aqueous solution of a binder, especially of maltodextrin, gums or starch, for example. Remaining ingredients such as emulsifier, desintegrant, stabilizer, micronutrients and/or vitamins may be added during the agglomeration step, for example.

This agglomeration step may be carried out in a fluidised bed, in an AEROMATIC, or in a SHUGI agglomerator, for example.

The granules thus obtained may then be dried to a residual water content of between 1 to 5 %, preferably between 2 to 3.5%.

These granules may have a bulk density of from about 400 g/l to about 600 g/l, for example.

Further forming steps such as compacting and or spheronising may be provided for, so that the bulk density of the granules be increased up to values between about 500 and 1000 g/l, for example.

Embodiments of the process according to the present invention are illustrated in the following Examples in which percentages and parts are by weight.

### Example 1

An emulsion was prepared which contained 20 parts water, 15 parts palm olein, 15 parts skimmed milk powder and 0.6 part lecithin.

This emulsion was fed into a twin screw extruder together with 25 parts of skimmed milk powder, 15 parts lactose and 10 parts corn starch.

The mix prepared in this way at room temperature in a mixing zone of the extruder was then plasticised at 140°C under 8 MPa in a mechanical compressing and shearing zone of the same extruder. The plasticised mix was extruded in strands through cylindrical openings 2 mm in diameter pierced in a die plate provided at the end of the extruder.

The strands were cut into granules 5mm in length which had a bulk density of 500 g/l.

These granules were free flowing and instantly dispersible in warm or boiling water.

### Example 2

19 parts of an oil composition containing equal amounts of coconut oil, palm olein and soya bean oil were mixed with 19 parts of lactose at 60°C for 10 min.

The mixture was agitated in a LOEDIGE mixer at 60°C for 1 min and further mixed successively for 3 min with 14 parts cold swelling starch and for 7 min with 43 parts skimmed milk powder, while cooling the mixer with water at room temperature.

The powdery mix thus obtained was agglomerated with the aid of an aqueous solution which contained 0.2 part lecithin, 1 part maltodextrin, 1 part corn starch, and 0.1 part of antioxydants (tocopherol), in a SHUGI agglomerator.

The granules thus obtained were dried in a fluidised bed dryer to a residual water content of 2%.

The dried granules had a bulk density of 500 g/l. They were free flowing and instantly dispersible in warm or boiling water. Moreover, if simply shaken together with warm or boiling water, they instantly provided a stable emulsion.

## Claims

1. A process for the production of a free-flowing and instantly soluble granular food product, comprising preparing a mix of an oil or fats and powdery carbohydrates and/or protein rich materials, and agglomerating and/or plasticising and/or forming the mix into granules.

2. A process as claimed in claim 1, comprising preparing said mix in an extruder, plasticising the mix in the extruder and forming the mix into granules by extruding the plasticised mix in strands and cutting the strands.

3. A process as claimed in claim 1, comprising mixing powdery carbohydrates and/or protein rich materials with an oil or fat, further mixing the mixture thus obtained with further powdery carbohydrates and/or protein rich materials in order to obtain a powdery mix, and forming the mix into granules by agglomeration and/or other forming techniques.

4. A process as claimed in claim 1, in which said mix comprises, in part by weights, from 5 to 95 parts, preferably from 30 to 70 parts of carbohydrates, up to 40 parts, preferably from 15 to 30 parts of proteins, and up to 80 parts, preferably from 5 to 40 parts of oil or fats.

5. A process as claimed in claim 4, in which the following components are added before and/or after preparing said mix:
- up to 25 parts, preferably up to 15 parts of water,
- up to 5 parts, preferably up to 0.6 part of emulsifier,
- up to 3 parts, preferably up to 1 part of desintegrants,
- up to 3 parts, preferably up to 1 part of stabilizers,
- and, optionally, vitamins, micronutrients and/or antioxidants.

6. A process as claimed in claim 2, comprising preparing an emulsion from an oil, water and an emulsifier, and introducing simultaneously or successively said emulsion and said powdery materials into the extruder.

7. A process as claimed in claim 2, comprising preparing a mixture of an oil or fats and powdery carbohydrates, preparing an aqueous emulsion of an oil and powdery protein materials, and introducing simultaneously or successively the mixture and the emulsion into the extruder.

8. A process as claimed in claim 3, comprising carrying out the agglomeration with the aid of steam and/or an aqueous solution of a binder, especially of maltodextrin, gums or starch, and drying the granules thus obtained to a residual water content of between 1 to 5 %, preferably between 2 to 3.5%.
